# EUROPEAN PATENT SPECIFICATION

(11) **EP 2 410 115 B1**
(45) Date of publication and mention of the grant of the patent: **17.12.2014**
(21) Application number: 11174409.0
(22) Date of filing: 18.07.2011
(51) Int. Cl.: E05F 15/20, G06K 9/00, G06K 9/32, G06T 7/20

(54) **System for controlling automatic gates**
System für die Kontrolle von automatischen Toren
Système pour la contrôle des portes automatiques

(30) Priority: 19.07.2010 IT MI20101327
(43) Date of publication of application: 25.01.2012
(73) Proprietor: Vislab S.r.l., 43124 Parma (IT)
(72) Inventor: Bombini, Luca, 43040 Felegara (Parma) (IT); Debattisti, Stefano, 46049 Volta Mantovana (Mantova) (IT); Medici, Paolo, 42020 Albinea (Reggio Emilia) (IT)
(74) Representative: Dondi, Silvia

(56) References cited:
- WO-A2-2005/067424
- DE-A1-102008 061 910
- US-A1- 2001 030 689
- US-A1- 2005 169 367
- US-A1- 2006 244 403
- KA KEUNG LEE ET AL: "Boundary modeling in human walking trajectory analysis for surveillance", ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA,IEEE, US, vol. 5, 26 April 2004 (2004-04-26), pages 5201-5206, XP010768218, ISBN: 978-0-7803-8232-9

## Description

The present invention relates to a system for controlling automatic gates.

In particular, the invention relates to a system for controlling automatic gates implemented by at least two image acquisition devices.

### PRIOR ART

As is well known, the use of automated gates is now common in traffic management, both for pedestrian and vehicle access control.

These devices use hydraulic cylinders for opening and closing operations and are generally controlled by a special control unit that manages all the parameters to move the gate itself.

One of the most important aspects that emerged following the introduction of the automatic control for moving said devices concerns safety issues: automation involves dangers, because there is a risk that persons or things within the range of the moving parts of the gate can be hit during the opening or closing operations of the gate in question. For this reason different safety devices have been incorporated into said automatic gate systems to monitor their operation.

Currently, there are two types of automatic gates:
- Sliding gates: have a single door and the opening is performed by sliding the door parallel to the longest side of the gate.
- Swing gates: have one or two leaves and the opening is performed by rotating each leaf around a respective axis of a respective hinge structure of the gate.

Swing gates have many more safety problems than sliding models and their intrinsic characteristics, such as the obstruction of the leaves, make them particularly difficult to manage through artificial vision.

Double leaf swing gates with completely obstructed leaves are surely the most difficult gates to manage.

In other words, the leaf in this case does not allow visibility from one side of the gate to the other, preventing the use of any vision system able to exploit this characteristic.

The typical installation of a double leaf swing gate uses two pairs of photocells: a first pair covering the threshold of the gate and a second pair covering a line shortly beyond the maximum opening of the leaves.

These photocells are principally intended to stop the closing movement of the gate in the event there is an object along the line covered by the sensor. On the contrary, the opening movement is not usually affected by any event.

In practice the aforementioned safety systems have various problems:
- Size of objects: the photocells are installed at a fixed height and detect objects on a single line only and therefore objects smaller than said height are not detected by these sensors.
- Staticity of the coverage: the sensors are fixed, have the ability to detect only along a single fixed line and therefore they are suitable for the detection of sufficiently large moving subjects. It is easy to understand that the presence of objects or persons located inside the gate's operating area cannot be detected and therefore are in an unsafe situation in case the opening/closing of the gate is activated.
- Placement of the sensors: the photocells can be placed just outside the operating area of the leaves, working externally with respect to it and not directly on the unsafe operating area: once again this approach is not satisfactory for subjects that are already within the unsafe operating area.

Documents U.S. 2006/0244403 and WO 2005/067424 show control systems for the opening and closing of automatic doors with image sensors that monitor the approach area of said doors detecting the approach of a subject and consequently activating the automatic opening of the doors themselves.

Documents U.S. 2006/0244403 and WO 2005/067424 are relevant to applications other than those specifically intended by the present invention as they are specifically intended for sliding doors and not automatic gates and as a result do not address any of the technical problems addressed by the present invention.

In addition, U.S. 2006/0244403 and WO 2005/067424 address the problem of achieving the opening of an automatic door at the approach of subjects.

Disadvantageously, the solutions proposed in U.S. 2006/0244403 and WO 2005/067424 do not guarantee that a door stops when, for example, a subject is crossing the threshold of the door, that is, in an area not covered by the cameras.

In other words, U.S. 2006/0244403 and WO 2005/067424 do not efficiently detect unsafe situations.

The purpose of this invention is to provide a system for controlling an automatic gate with the ability to operate it in a completely safe manner.

The specific purpose is to create a system for controlling automatic gates able to efficiently and reliably detect an unsafe situation during the opening/closing operations when subjects are near said gates.

### SUMMARY OF THE INVENTION

These and other purposes are achieved by a control system for automatic gates, as described in the claims below.

The system according to the invention achieves the following advantages over the prior art:
- it prevents the operation of the gate in the presence of subjects of every kind, shape and in any location within the range of the gate;
- it prevents the operation of the gate in the presence of stationary and/or moving subjects.
- it enables the recording of images;
- it allows images or image sequences to be sent to users/operators for remote monitoring;
- it efficiently and reliably detects an unsafe situation when opening/closing a gate.

These and other advantages of the invention will be explained more in detail in the description provided below and with the help of an indicative and not limiting embodiment related to the annexed drawings.

### BRIEF DESCRIPTION OF THE DRAWINGS

Fig. 1 shows a block diagram of the system for controlling an automatic gate according to the invention.
Fig. 2a shows schematically a double leaf automatic swing gate, according to a first embodiment of the invention.
Fig. 3 a shows schematically the area of influence of the automatic gate of Fig. 2a.
Fig. 3d shows schematically the area of influence of the automatic gate in a second embodiment of the invention.

### DETAILED DESCRIPTION

A system for controlling automatic gates according to the invention is able to identify the influence regions of the gate and to recognize the presence of subjects within the gate's range of operation.

In particular, the gate can be classified according to the type of movement of its movable components.

Automatic gates, therefore, may comprise one or two leaves, where the automatic gate 30 is configured to operate the opening/closing of the leaves through their controlled rotation.

The recognition of subjects near the gate is based on images acquired near the gate and properly processed.

The system comprises at least two image acquisition devices that capture images of subjects within the gate's range of operation.

The system is able to control the opening/closing of the gate according to the presence or absence of subjects in its range of operation.

The term "subject" in this document means any object or person, whether still or in movement, within the gate's range of operation.

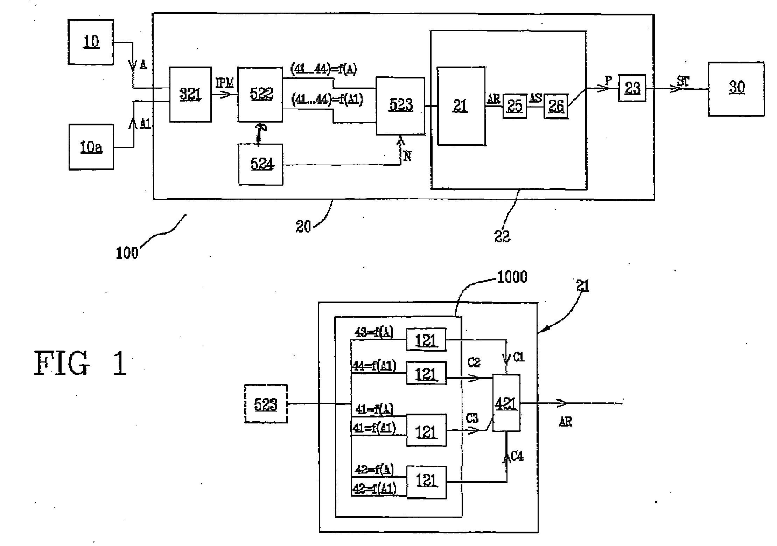

With reference to Figure 1, a system 100 for controlling automatic gates 30 comprises at least two acquisition devices 10, 10a, 10b, 10c for the acquisition of images A, A1.

In a first embodiment of the invention, there are two image acquisition devices 10, 10a foreseen.

The image acquisition devices 10 and 10a are cameras.

In a second embodiment of the invention, there are four image acquisition devices 10, 10a, 10b, 10c.

The image acquisition devices 10, 10a, 10b, 10c are cameras.

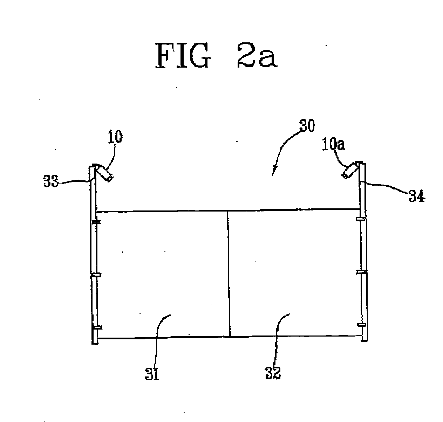

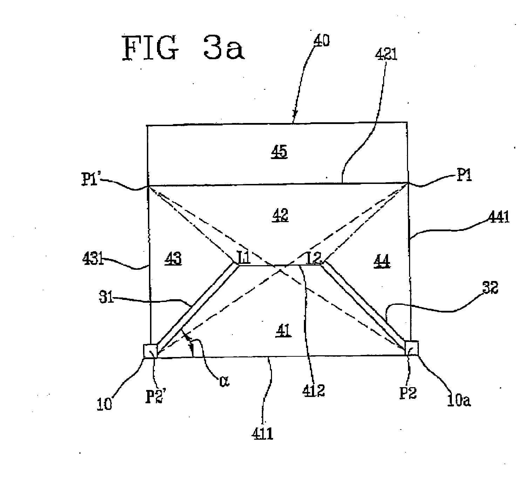

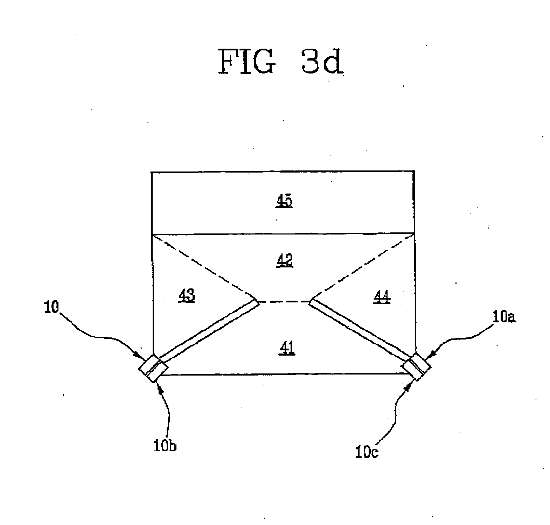

With particular reference to the groups of figures 2a and 3 a the two image acquisition devices 10 and 10a are associated with the automatic gate 30, which, in turn, is associated with a reference area 40 of the same gate.

The reference area 40 is defined as the area where the system of the invention can detect a subject near the automatic gate 30.

The automatic gate 30 will be supported by at least one support structure 33, 34.

Figure 2a shows a first embodiment of the invention which by is a double leaf automatic gate 30.

In other worlds, as already noted, the automatic gate 30 is configured to accomplish its opening/closing operations through the controlled rotation of its movable components (leaves).

In this embodiment, the automatic gate 30 comprises two support structures 33, 34.

It also comprises a first leaf 31 and a second leaf 32.

The two leaves 31, 32 are hinged to the support structures 33, 34 and able to rotate around them causing the opening/closing of the automatic gate 30.

The image acquisition devices 10 and 10a are bound to their respective support structures 33, 34, and installed at a higher level with respect to the automatic gate 30, angled downwards so as to cover the entire reference area 40.

In operating conditions, the two leaves 31, 32 are suited to divide the reference area 40 in a plurality of influence regions 41, 42, 43, 44 of variable surfaces (Fig. 3a).

In other words, once put in motion, said leaves 31, 32 sweep the reference area 40 resulting in influence regions with variable surfaces as a function of an opening angle α of the leaves and of the presence of a subject within the reference area 40.

The detection of the presence of a subject will be discussed below in reference to the detection module 22.

As shown in Fig. 3a, to identify a reference area 40 the following are defined:
- Two reference points P1 and P1' constituting the end points of an area which both cameras 10, 10a cover;
- Two points P2 and P2', respectively located in the centres of the lenses of the cameras 10a, 10;
- A first free end L1 of the first leaf 31;
- A second free end L2 of the second leaf 32.

Again with reference to Fig. 3a, the reference area 40 is bound by four ideal lines:
- A first boundary line 411, coinciding with the line determined by the resting position of the leaves 31, 32 when closed;
- A second boundary line 421 that ideally connects the two reference points P1, P1';
- A third and fourth boundary line 431 and 441 respectively coinciding with the lines determined by the resting position of the leaves 31 and 32 at their maximum aperture, and extending up to their respective reference points P1, P1'.

Therefore, in detail, the influence regions 41, 42, 43, 44 are identified as follows:
- The first region 41 is identified in front of the automatic gate 30, that is, on the side opposite to the opening, and only under the condition where the leaves 31, 32 are at least partially open.

This first region is bound by the leaves themselves, by the first boundary line 411, and by a fifth boundary line 412 ideally joining the free ends L1, L2 of the leaves 31, 32.

This region is configured so as to increase its surface as a function of the increase in the amplitude of the opening angle α of the leaves 31, 32.
- The second influence region 42 is identified on the back side of the automatic gate 30, that is, from the opening side of the gate itself.

This second region is bound by the fifth boundary line 412, the second boundary line 421 and by the line segments joining the free ends L1, L2 of the leaves 31, 32 with the corresponding reference points P1', P1.

This region is configured to decrease its surface as a function of the increase in the amplitude of the opening angle α of the leaves 31, 32.
- The third region 43 is identified on the back side of the automatic gate 30, that is, from the opening side of the gate itself.

This third region is bound by the first leaf 31, the third boundary line 431 and by a line segment joining the first free end L1 with one of the the reference point P1'.
- The fourth region 44 is also identified on the back side of the automatic gate 30, that is, from the opening side of the gate itself.

This fourth region is bound by the second leaf 32, the fourth boundary line 441 and by a line segment joining the second free end L2 with the other of the reference point P1.

The third region 43 and the fourth region 44 are configured so as to reduce their surface as a function of the increase in the amplitude of the opening angle α of the leaves 31, 32.

Preferably, with particular reference to Fig. 3a, a fifth region 45 is identified, outside the reference area 40 adjoining the second region 42, but on the opposite side of the second boundary line 421. This region 45 is bound laterally by the continuation of the third and fourth boundary lines 431, 441 beyond the reference points P1, P1'.

Preferably, the system also detects subjects in this region, but as a result of the detection, the system only generates a warning signal, such as a sound, without affecting the movement of the automatic gate 30.

The detection can occur by means of additional cameras, not shown in the figure.

In the second embodiment of the invention, with particular reference to Figure 3d, there are four image acquisition devices 10, 10a, 10b and 10c associated with the automatic gate.

In particular, in figure 3d the four image acquisition devices 10, 10a, 10b and 10c are associated with the automatic gate 30, which, in turn, is associated with a reference area 40 of the same gate. Reference area 40 coincides with that previously described in the first embodiment (Fig. 3a). Figure 3d is a more schematic representation than Figure 3a, but it must be understood to comprise all the components of Figure 3a, even if not shown.

With reference to Figure 3d, the acquisition devices 10,10b and 10a, 10c are bound to their respective support structures 33, 34, and installed at a higher level with respect to the automatic gate 30, angled downwards so as to cover the entire reference area 40.

The technical effect achieved by the second embodiment (Fig. 3d) compared to the solution in Figure 3a (first embodiment) is the redundant detection of subjects in the third region 43 and in the fourth region 44 enabled by the two pairs of cameras 10, 10b and 10a, 10c.

A further technical effect is the detection reliability even under limited visibility conditions resulting from complications related to the installation location of the gate (for example: installation with nearby plants or bushes that could end up in the monitored area due to atmospheric events, or sudden changes in brightness). Furthermore, this system increases the recognition accuracy of the subjects shape.

In all embodiments of the invention, the system 100 comprises an image processing unit 20, connected to the image acquisition devices 10, 10a, 10b, 10c.

The processing unit 20 receives the acquired images A, A1 from the image acquisition devices 10, 10a, 10b, 10c and processes them to extract information about the reference areas 40 and the position of the acquired subjects.

In general it should be noted that in this context and in the following claims, the image processing unit 20 is presented as divided into different memory modules and operating modules for the sole purpose of providing a clear and complete description of the functionalities of the unit itself.

In reality, these functionalities may be performed by a single electronic device, suitably programmed, and the different modules may correspond to hardware devices and/or software routines of the programmed device.

Alternatively or in addition, said functionalities can be implemented by a plurality of electronic devices on which the modules can be distributed.

Furthermore, the devices involved may use one or more processors to execute the instructions contained in the memory.

Additionally, the memory modules can be distributed on different computing devices both locally and remotely based on the network architecture to which they are connected.

The image processing unit 20 comprises a first detection module 522 configured to detect an image of one or more of the influence regions 41, 42, 43, 44 in a reference area 40.

The detected images are thus obtained as a function of the acquired images A, A1 and shown in Figure 1, respectively as (41...44)=f(A) and (41...44)=f(A1).

The movable components 31, 32, create a noise N in the detected images because they cover a part of the area to be processed to monitor the presence of subjects.

A noise detection module 524 is configured to detect this noise N with two possible methods:
1) through a dedicated device (position encoder), applied to the motors of the gate, which can provide:
   a) the exact opening/closing angle of the leaf, in relation to the axis of rotation of the gate, compared to the 3D model of the gate obtainable during the installation phase;
   b) the exact translation of the leaf, in relation to the sliding direction of the gate, compared to the 3D model of the gate obtainable during the installation phase;
2) if the encoder above is not available, the position of the leaves is detected with computer vision techniques.

Once the noise N is detected, it is filtered from the images of the corresponding influence regions 41, 42, 43, 44.

To this end, the image processing unit 20 comprises a first filtering module 523 configured to remove the noise N of the automatic gate 30 from the image detected of one or more influence regions 41, 42, 43, 44.

More precisely, the first filtering module 523 compares the image detected by the first detection module 522 with the noise N detected by the noise detection module 524.

The resulting images of the influence regions represent the monitored area cleared of the movable components 31, 32.

Preferably, the comparison is carried out between IPM (Inverse Perspective Mapping) images, that is, processed with a well-known image remapping technique, which from a real distorted image and a perspective view of a scene, provides an image of the same scene from above and without any distortion.

To simultaneously remove the radial distortion effect created by the optics and the perspective effect, known mathematical models can be used to associate the points of the IPM image (corrected image) to the corresponding points of the real image.

The use of the IPM technique will be described in more detail below.

This technique is used in reference to the present invention to determine a geometric correspondence between pixels of the image and the real world points.

The IPM technique is not the only technique that performs this function.

In fact, it can be replaced with other similar geometric transformation techniques available in the literature.

The image processing unit 20 also comprises a second detection module 22 configured to detect a subject in the reference area 40, as a function of the acquired images A, A1. Preferably, the second detection module 22 is configured to detect a subject in the reference area 40as a function of the acquired images A, A1 cleared of the noise N through the first filtering module 523.

In the embodiment of the invention in which the automatic gate 30 comprises double leaves 31, 32 as its movable components, the possible subject in the reference area 40 is identified as described herein.

For the detection of a subject in each of the regions 43 and 44, the second detection module 22 is configured to receive images A or A1 from a single acquisition device 10 or 10a.

In other words, the acquisition is monoscopic.

For the detection of a subject in each of the regions 41 and 42, the second detection module 22 is configured to receive images A and A1 from both acquisition devices 10 and 10a In other words, the acquisition is stereoscopic, that is, equipped with two image acquisition devices that frame the same scene from two different positions, capturing respective images A and A1.

The cameras are configured to acquire scenes composed of a plurality of images or frames in sequence.

The subject to be detected can be motionless or moving in any of the regions 41, 42, 43, 44 composing the reference area 40.

In other words, the second detection module 22 comprises a selection module 21 configured to select, from the acquired images A and A1, representative areas AR of a subject in the reference area 40.

Preferably, the selection is carried out using acquired images A, A1 cleared with the first filtering module 523 of the noise image N created by the movable components 31, 32.

Preferably, after the noise clearance process, if the movable components are constituted of at least one leaf 31, 32, the images are acquired and processed using different graphic techniques depending on the location, of the influence regions 41, 42, 43, 44 with respect to the leaves 31, 32.

The two techniques involved and described below, are:
- Monoscopic acquisition carried out on the influence regions 43 and 44;
- Stereoscopic acquisition carried out on the influence regions 41 and 42.

### Monoscopic acquisition and the influence regions 43 and 44

In the event that there are no subjects in transit near the automatic gate 30, the acquired images A or A1 are usually unchanged background images of the influence regions 43 and 44 acquired within the operating range of the corresponding acquisition devices 10 and 10a.

If, however, there are moving subjects within the areas 43, 44, the selection of images of that subject is carried out through a well-known graphic technique of background subtraction described below.

To select the images of a moving subject, that technique uses, preferably, a recursive process in which each image participates in the estimation of the background image.

This is due to the lack of prior information about the possible variations of the background and the frequency with which these variations occur.

In this respect, the influence of the prior acquired images A, A1 is reduced by applying two different weights to the points of the background and to the current acquired images A, A1. The four main phases of a background subtraction algorithm are:
(A) Pre-processing;
(B) Modelling of the background;
(C) Identification of the potential subject (foreground);
(D) Data validation.

### (A) Pre-processing

The pre-processing phase consists of a series of simple processes that convert the video input, that is, the sequence of acquired images A, A1 into a format that can be processed in the subsequent phases.

In the initialization phase the first acquired image A, A1 is copied into the image of the background which coincides with the image of the respective third influence region 43 and fourth influence region 44, which from that moment on will be contiguously updated by each subsequent acquired image A, A1.

### (B) Modelling of the background

The modelling of the background uses newly acquired images A, A1 to calculate and update the background model. This model provides a statistical description of the entire monitored scene.

Each new image generates a comparison image C1, C2 of the moving subject which is obtained as a comparison between each respective acquired image A, A1 and the corresponding background image.

The background image is acquired until the system generates a command for the opening/closing of the automatic gate 30.

More specifically, for this purpose, the selection module 21 comprises a first image comparing module 1000 configured to generate comparison images C1, C2, obtained comparing the respective acquired images A, A1 of the reference area 40, with one or more reference images.

Preferably, the image comparing module 1000 comprises a first operating module 121 configured to compare the acquired images A, A1 with corresponding background images, the background images constituting the aforementioned reference. The comparison generates the respective comparison images C1, C2.

In particular, in this case, the comparison is carried out between the acquired images A, A1 in the respective influence regions 43 and 44 and one or more reference images in the respective influence regions 43 and 44.

More specifically, the operating module 121 is configured to carry out the comparison through a recursive process providing different weights to the acquired images A, A1 and the respective background images.

In other words, the weight of the acquired images A, A1 being processed is greater than the weight of the corresponding background image, in order to simplify the extraction of the image of the moving subject from the constant background.

The selection module 21 also comprises image filtering means 421 configured to identify the representative areas AR of the subject within the reference area 40, from the comparison images C1, C2.

Preferably, these image filtering means 421 comprise a low pass filter.

The filtering means select the representative areas AR of the comparison images C1, C2, through the manipulation of two parameters:
- a dimension of the filtering window
- a filter threshold used to evaluate the areas selected by the filtering window.

In other words, the filtering means are configured according to a preset filtering window and a preset filter threshold.

Preferably, the filtering window "frames", in succession, different parts of the comparison image C1, C2.

Preferably, the filter threshold allows a minimum number of pixels used to identify a moving subject from the background to be set.

In other words, the filter threshold allows the minimum spatial pixel density able to identify a moving subject from the background to be set.

### (C) Identification of the potential subject (foreground)

During the identification process of the potential subject, after the background modelling phase, the input image is compared with the generated background model, identifying the pixels that potentially represent moving subjects.

The representative areas AR are identified, among those selected by the filtering window, as the areas with spatial pixel densities greater than those established with the preset filter threshold.

The representative areas AR are graphically identified by "blob" (Binary Large OBject), that is, large amounts of binary data used for the storage and manipulation of information, particularly in relation to images and video films.

In other words, the blob is a binary representation mask of a potential subject, where the latter is identified by a spatial pixel density greater than that established with the preset filter threshold.

### (D) Data Validation

Finally, the data validation process examines the mask of the potential subject eliminating the pixels that do not correspond to an actual moving subject and produces the final mask of the subject in question.

Directly using the source images in the background subtraction algorithm, the distortion generated by the lenses of the acquisition device 10, 10a and the perspective distortion have the effect of altering essential information on the shapes of the representative areas AR.

The deformation of the image reproduced has major repercussions in the calculation of the subjects' mask because the filtering methods described above are very sensitive to the dimensional parameters of the filtering rectangle.

If the rectangle is too small, much of the ambient noise (small shadows or reflections) is not filtered and some areas of the potential subjects are not comprised in the subject mask and participate as background when the background itself is updated.

Conversely, if the rectangle is too large, the potential moving subjects in the peripheral areas of the image can be dropped from the mask representing the subjects.

To overcome this problem a fixed size of the rectangle must be used for the entire area of the image.

In other words, the filtering window must have a fixed size for the entire area of the image.

To enable this, the acquired images A, A1 are suited to be remapped preferably with the aforementioned Inverse Perspective Mapping (IPM) technique, although other techniques can be used to determine a geometric correspondence between pixels of the image and the real world points.

To this end, the processing unit 20 comprises an image remapping module 321 configured to remap the acquired images A, A1 in the reference area 40 into IPM images, so that the input images to the first detection module 522 are remapped IPM images.

Again with reference to the first embodiment of the invention, that is, when the movable components of the gate are made up of at least one leaf 31, 32, in this case, the image remapping module 321 is configured to remap the acquired images A, A1 in the respective influence regions 43 and 44 into IPM images.

After the IPM remapping procedure, the IPM images are appropriately filtered through the filtering means 421 described above in relation to the background subtraction technique.

In successive comparison images, that is, obtained as a comparison between each acquired image A, A1 and the background image, the representative area AR identifies the potential subject in different positions following the movement of the subject itself with respect to the background.

### Stereoscopic acquisition and influence regions 41 and 42.

In this second case, within the selection module 21, the image comparing module 1000, unlike in the monoscopic case, is configured to generate comparison images C3, C4, obtained as a comparison between the acquired images A, A1 and one or more reference images.

In particular, the image comparing module 1000 comprises a second operating module 221 configured to compare a first acquired image A, from the first acquisition device 10 in the first influence region 41, and a second acquired image A1, from the second acquisition device 10a in the same first influence region 41.

Similarly, the second operating module 221 is configured to compare a first acquired image A, from the first acquisition device 10 in the second influence region 42, and a second acquired image A1, from the second acquisition device 10a in the same second influence region 42.

Preferably, the images A, A1 are acquired simultaneously and the second acquired image A1 is used as the reference image.

With reference to the first embodiment of the invention, the comparison generates comparison images C3 (for the first region 41) and C4 (for the second region 42).

Preferably, the comparison image C3, C4 is obtained as an difference-image between the detected images.

In other words, for the extraction of images of the first influence region 41 and from the second influence region 42 and for the extraction of the image of the moving subject, it is no longer necessary to maintain a background model, as is foreseen for the third 43 and fourth 44 influence region with monoscopic acquisition.

The comparison between the images acquired by the two image acquisition devices is preferably carried out by pixel-pixel subtraction between two acquired images.

To generate the comparison images C3, C4, the acquired images A and A1 can also be IPM remapped images.

Subsequent processed images are obtained starting from the comparison images C3, C4.

In detail, the image filtering means 421 are configured to identify representative areas AR from the comparison images C3, C4 at a given moment.

The image processing unit 20 comprises one area correlation module 25 configured to recognise the representative areas AR of the same moving subject in successive comparison images C1,C2,C3,C4.

In other words, the area correlation module 25 is configured to recognize blob areas, representing the same moving subject in successive comparison images C1, C2, C3, C4.

The basic assumption is that by acquiring images with a high enough frequency, the position of a subject and therefore its related representative area AR in successive images does not vary much.

Under this assumption and for the purposes of the system it is sufficient to identify an association area AS of the representative areas AR to assess the correlation.

The correlation operation involves two phases:
- Labelling
- Calculation of the geometric parameters and the overlapping areas AS

### Labelling

The labelling procedure foresees the labelling of different representative areas AR of an image to enable their unambiguous differentiation.

This operation applies to a binarized image of the representative area AR to generate an output image in which, for each labelled representative area AR, a different fill colour is associated.

This operation is carried out on the masks of the aforementioned subjects in such a way as to calculate all the geometrical parameters for each subject.

In other words, the area correlation module 25 is configured to label in an identical manner the representative areas AR of the same subject in successive comparison images C1, C2, C3, C4.

In addition, the area correlation module 25 is configured to identify association areas AS among the representative areas AR labelled in an identical manner in the reference area 40. The association can be identified:
- through the overlapping of representative areas AR labelled in the same way;
- through the contiguity of the representative areas AR labelled in the same way.

In both cases, the association is carried out after a filtering phase where a further filtering module is configured to delete the representative areas AR having an area smaller than a preset area.

In other words, the filtering based on a minimum area of the representative areas AR eliminates all the representative areas with a value below a user preset threshold from the image.

This first filter is designed to eliminate all components of the image that were generated by noise or errors in the processing of the images themselves.

In the first case of association, the area correlation module 25 is configured to identify the association areas AS through the overlapping of representative areas AR labelled in the same way.

The calculation of overlapping/intersection between areas is known to those skilled in the art. In the second case of association, the area correlation module 25 is configured to identify association areas AS through the contiguity of the representative areas AR labelled in the same way.

In particular, the contiguity can be evaluated based on:
- the distance between the coordinates of the centroid in both directions in proportion to the size of the representative area AR;
- the Euclidean distance between the centroids of the representative areas AR in proportion to the longest diagonal of the representative area AR with the largest area between the two compared representative areas.

A final filtering of the size of the representative areas AR is carried out because of all the representative areas, those of real interest will be much larger than those containing processing errors.

Consequently, this second filtering process can use a much higher threshold without the risk of eliminating representative areas containing useful information.

Other equivalent known techniques, or resulting from an improvement of the technique shown, allow the calculation of the overlapping area AS.

The second detection module 22 also comprises a position module 26 configured to determine the main parameters P which identify successive positions of the representative areas AR of a same subject in the reference area 40.

Module 26 operates after the correlation module 25 has recognized representative areas AR of a same moving subject in successive comparison images C1, C2.

Preferably, the position module 26 determines the main parameters P as a function of the association areas AS identified by the area correlation module 25.

In other words, the main parameters P are representative of a possible overlapping between representative areas AR.

In other terms, the main parameters P are representative of the possible continued presence of a same subject in the reference areas.

Preferably the main parameters P are the centroid or the lowest point associated with each representative area AR.

Preferably, the path of the different representative areas AR is constructed by keeping track of the steps performed by the corresponding centroid in successive images.

If the main parameters P are representative of a subject detected in successive images, then the subj ect represents a real obstacle.

In other words, the overlapping areas AS between successive representative areas will not be null.

This situation can be likened to the real case in which a person, animal or object is in the area of influence of the gate.

If, in turn, the main parameters P are not representative of a subject detected in subsequent images, then the subject does not represent a real obstacle.

In this case, the area correlation module 25 will not have detected association areas AS between successive representative areas AR of the subject.

This situation can be likened to the real case in which at a given instant, in the area of influence of the gate, an easily moved subject, such as a tree leaf, is detected and in the next instant is no longer detected.

The image processing unit 20 also comprises a subsequent activation module 23.

The activation module 23 is configured to control an action AZ of the automatic gate 30 when the subject is detected within the reference area 40.

In other words, the activation module 23 is configured to control an action AZ of the automatic gate 30 when it receives the main parameters P representing the not null association areas AS from the position module 26.

The activation module 23 is configured to carry out at least one of the following actions (AZ) on the automatic gate start (START), stop (STOP), regular restart (RSTART), slow (SLOW) and acceleration (FAST).

Therefore, the second detection module 22 generates an output represented by the aforementioned main parameters P.

In other words, the activation module 23 is configured to control an action on the movable components 31, 32 when, in successive images, a subject within the reference area 40 is detected, that is, when the association areas AS are not null.

In the case a subject or obstacle is detected during the closure of the automatic gate, for example, the activation module 23 is configured to send a STOP command for the movable components 31, 32 when, in successive images, a subject within the reference area 40 is detected.

Once the subject is no longer present, that is, in correspondence with zero association areas AS, the activation module 23 can send an RSTART command for the operation of the movable components 31, 32.

Based on further input decision parameters for the module 23, the STOP command may be substituted with a SLOW command for the operation of the movable components 31, 32. That may occur, for example, in the case where the subject is of negligible size and easily moved by the moving leaves of the gate itself (an accumulation of tree leaves or the like).

Based on further input decision parameters for the module 23, the RSTART command may be substituted by a FAST command for the operation of the movable components 31, 32 to complete the action in the shortest possible amount of time.

Based on further input decision parameters for the module 23, other command examples are: ALERT, which is a message addressed to the operator to report the intervention of the gate's safety device and REC, which is a system message that controls the recording of a timeline indicating a potential unsafe situation.

## Claims

1. A system (100) for controlling a double leaf automatic swing gate (30),
the gate comprising two support structures (33, 34) and two leaves (31, 32) that are hinged to said support structures (33, 34) and are able to rotate around them causing the opening/closing of the automatic gate (30),
and said system (100) comprising:
- two cameras (10, 10a,) being bound to their respective support structures (33, 34), being installed at a higher level with respect to the automatic gate (30) and being angled downwards for the acquisition of images (A, A1) of a reference area (40) of said automatic gate (30) that is an area where the system (100) can detect a subject near said gate (30), said reference area (40) being defined by:
- a first boundary line (411), coinciding with the line determined by the resting position of the leaves (31, 32) when closed;
- a second boundary line (421) that ideally connects two reference points P1 and P1' defined as end points of an area which both cameras (10, 10a) cover and lying on the lines determined by the resting position of the leaves (31,32) at their maximum aperture;
- a third and fourth boundary line (431, 441) respectively coinciding with the lines determined by the resting position of the leaves (31,32) at their maximum aperture, and extending up to their respective reference points (P1, P1');
said reference area being divided into at least four influence regions for at least partially open leaves,
said first influence region (41) being bound by said leaves (31,32), by the first boundary line (411), and by a fifth boundary line (412) joining the free ends defined as L1 and L2 of the leaves (31, 32), whereby said first influence region (41) increases its surface as the opening angle (a) of the leaves (31, 32) increases ;
and the second influence region (42) is bound by said fifth boundary line (412), by said second boundary line (421) and by line segments joining each free end (L1,L2) of said leaves (31,32) with its corresponding reference point P1' and P1 on the same respective side of the reference area, whereby said second influence region (42) decreases its surface as the opening angle (a) of the leaves (31, 32) increases;
and the third influence region (43) is bound by said first leaf (31), by said third boundary line (431) and by a line segment joining said first free end L1 with the reference point P1' on the same side of the reference area;
and the fourth influence region (44) is bound by said second leaf (32), by said fourth boundary line (441) and by a line segment joining said second free end L2 with the other of said reference points P1, L2 and P1 being on the same side of the reference area,
whereby said third influence region (43) and said fourth influence region (44) decrease their surface as the opening angle (a) of the leaves (31, 32) increases;
- an image processing unit (20), connected to said two cameras (10, 10a), said unit comprising:
- a first detection module (522) configured to detect an image of said influence regions (41,42,43,44) in a reference area (40), said detected image being obtained as a function of the acquired images (A, A1);
- a second detection module (22) configured to detect, in said plurality of detected influence regions (41,42,43,44), a subject on the basis of the acquired images (A, A1),
said second detection module (22) being configured to detect and process images (A, A1) from a single camera for the detection of a subject in each of the third and fourth influence regions and configured to detect and process images from both cameras for the detection of a subject in each of the first and second influence regions
- an activation module (23) configured to control an action (AZ) of said automatic gate (30) when said subject is detected within said area of reference (40).

2. System (100) according to claim 1 wherein said image processing unit (20) further comprises:
- a first filtering module (523) configured to remove a noise (N) of said automatic gate (30) from said image detected by said first detection module (522), said noise (N) being created by the leaves (31, 32) covering a part of the reference area.

3. System (100) according to any of the preceding claims wherein said second detection module (22) further comprises:
- a selection module (21) configured to select representative areas (AR) of said subject on the basis of said acquired images (A, A1) in said area of reference (40);
- a position module (26) configured to determine the main parameters (P) which identify successive positions of said representative areas (AR) of a same subject, in said reference area (40).

4. System (100) according to claim 3 wherein said selection module (21) comprises an image comparing module (1000) configured to generate comparison images (C1, C2, C3, C4), obtained as a comparison between said acquired images (A, A1) of said reference area (40), and one or more reference images.

5. System (100) according to claim 4 wherein said image comparing module (1000) comprises a first operating module (121) configured to compare said acquired images (A, A1) of said respective third influence region (43) and fourth influence region (44) with corresponding images of the background of said respective third influence region (43) and fourth influence region (44), said background images constituting said reference, said comparison generating respective said comparison images (C1, C2).

6. System (100) according to claim 4 wherein said comparing module (1000) comprises a second operating module (221) configured to compare a first acquired image (A), from a first camera (10) in said first or second influence region (41,42), and a second acquired image (A1), from a second camera (10a), in the same first or second influence region (41,42), said images being acquired simultaneously, said second acquired image (A1) constituting said reference, said comparison generating said comparison image (C3, C4).

7. System (100) according to any of claims 4 to 6 wherein said selection module (21) comprises image filtering means (421) configured, according to a predetermined filtering window and a predetermined filtering threshold, to identify said representative areas (AR) from said comparison images (C1, C2, C3, C4).

8. System (100) according to claim 1 wherein said images processing unit (20) comprises an image remapping module (321), configured to remap said acquired images (A, A1) as an input in said reference area (40), in such a way that the input images to said first detection module (522) are images remapped using a suitable technique for the determination of a geometric correspondence between the pixels of the image and the real world points.

9. System (100) according to claims 4 to 7, wherein said second detection module (22) comprises an area correlation module (25) configured to recognize representative areas (AR) of a same moving subject in said successive comparison images (C1, C2, C3, C4).

10. System (100) according to claim 10 wherein said area correlation module (25) is configured to
- label in an identical manner representative areas (AR) of a same subject in said successive comparison images (C1, C2, C3, C4);
- identify association areas (AS) among said representative areas (AR) labelled in an identical manner in said reference area (40), said position module (26) being configured to determine said main parameters (P) as a function of said association areas (AS) and to transmit said parameters (P) to said activation module (23).

11. System (100) according to any of claim 1 to claim 11 comprising four cameras (10, 10a, 10b, 10c) associated with said automatic gate (30), said cameras (10, 10a, 10b, 10c) being bound to their respective support structures (33, 34), being installed at a higher level with respect to the automatic gate (30) and being angled downwards so as to cover the entire reference area (40).

## Patentansprüche

1. System (100) für die Kontrolle eines automatischen Doppelflügelschwingtors (30),
wobei das Tor zwei Halterungskonstruktionen (33, 34) und zwei Flügel (31, 32) umfasst, die mittels einer Gelenkverbindung an den Halterungskonstruktionen (33, 34) befestigt und in der Lage sind, sich um diese zu drehen und das Öffnen/Schließen des automatischen Tors (30) zu bewirken,
wobei das System (100) umfasst:
- zwei Kameras (10, 10a), die mit ihren jeweiligen Halterungskonstruktionen (33, 34) verbunden sind, installiert auf einer höher liegenden Ebene im Vergleich zum automatischen Tor (30) und winkelig nach unten gerichtet für die Aufnahme von Bildern (A, A1) eines Referenzbereichs (40) des automatischen Tors (30), wobei es sich um einen Bereich handelt, in dem das System (100) einen Gegenstand in der Nähe des Tors (30) erkennen kann, wobei dieser Referenzbereich (40) definiert ist durch:
- eine erste Grenzlinie (411), die mit der Linie übereinstimmt, die durch die Ruheposition der Flügel (31, 32), wenn diese geschlossen sind, bestimmt ist;
- eine zweite Grenzlinie (421), die idealerweise zwei Referenzpunkte P1 und P1 miteinander verbindet, definiert als Endpunkte eines Bereichs, den beide Kameras (10, 10a) bedecken, und wobei die zweite Grenzlinie auf den Linien liegt, die durch die Ruheposition der Flügel (31, 32) bei deren maximalen Öffnung bestimmt werden;
- eine dritte und vierte Grenzlinie (431, 441), jeweils übereinstimmend mit den Linien, bestimmt durch die Ruheposition der Flügel (31, 32) bei deren maximalen Öffnung, und sich erstreckend bis zu deren jeweiligen Referenzpunkten (P1, P1');
wobei der Referenzbereich in mindestens vier Einflussregionen für mindestens teilweise geöffnete Flügel aufgeteilt ist,
wobei die erste Einflussregion (41) durch die Flügel (31, 32), die erste Grenzlinie (411) und eine fünfte Grenzlinie (412) begrenzt wird, zusammenfügend die freien Enden, definiert als L1 und L2 der Flügel (31, 32), wobei die erste Einflussregion (41) ihre Oberfläche erhöht, wenn sich der Öffnungswinkel (a) der Flügel (31, 32) erhöht;
und die zweite Einflussregion (42) durch die fünfte Grenzlinie (412), die zweite Grenzlinie (412) und Liniensegmente begrenzt wird, zusammenfügend jedes freie Ende (L1, L2) der Flügel (31, 32) mit ihren entsprechenden Referenzpunkten P1 und P1 auf derselben jeweiligen Seite des Referenzbereichs, wobei die zweite Einflussregion (42) ihre Oberfläche reduziert, wenn sich der Öffnungswinkel (a) der Flügel (31, 32) erhöht;
und die dritte Einflussregion (43) durch den ersten Flügel (31), die dritte Grenzlinie (431) und ein Liniensegment begrenzt wird, zusammenfügend das erste freie Ende L1 mit dem Referenzpunkt P1' auf derselben Seite des Referenzbereichs;
und die vierte Einflussregion (44) durch den zweiten Flügel (32), die vierte Grenzlinie (441) und ein Liniensegment begrenzt wird, zusammenfügend das zweite freie Ende L2 mit dem anderen der Referenzpunkte P1, wobei sich L2 und P1 auf derselben Seite des Referenzbereichs befinden,
wobei die dritte Einflussregion (43) und die vierte Einflussregion (44) ihre Oberfläche reduzieren, wenn sich der Öffnungswinkel (a) der Flügel (31, 32) erhöht;
- eine Bildverarbeitungseinheit (20), verbunden mit den zwei Kameras (10, 10a), wobei diese Einheit umfasst:
- ein erstes Erfassungsmodul (522), ausgelegt zur Erfassung eines Bilds der Einflussregionen (41, 42, 43, 44) in einem Referenzbereich (40), wobei das erfasste Bild als eine Funktion der aufgenommenen Bilder (A, A1) erhalten wird;
- ein zweites Erfassungsmodul (22), ausgelegt zur Erfassung eines Gegenstands auf der Grundlage der aufgenommenen Bilder (A, A1) in dieser Vielzahl an erfassten Einflussregionen (41, 42, 43, 44), wobei das zweite Erfassungsmodul (22) ausgelegt ist, um Bilder (A, A1) von einer einzelnen Kamera zu erfassen und zu verarbeiten, um einen Gegenstand in jeder, sowohl der dritten als auch der vierten Einflussregion zu erfassen, und ausgelegt, um Bilder von beiden Kameras zu erfassen und zu verarbeiten, um einen Gegenstand in jeder, sowohl der ersten und der zweiten Einflussregion zu erfassen;
- ein Aktivierungsmodul (23), ausgelegt, um eine Betätigung (AZ) des automatischen Tors (30) zu steuern, wenn der Gegenstand im Referenzbereich (40) erfasst wird.

2. System (100) nach Anspruch 1, wobei die Bildverarbeitungseinheit (20) zudem umfasst:
- ein erstes Filtermodul (523), ausgelegt, um eine Verzerrung (N) des automatischen Tors (30) vom Bild, erfasst durch das erste Erfassungsmodul (522) zu beseitigen, wobei die Verzerrung (N) von den Flügeln (31, 32) verursacht wird, die einen Teil des Referenzbereichs abdecken.

3. System (100) nach einem der vorhergehenden Ansprüche, wobei das zweite Erfassungsmodul (22) zudem umfasst:
- ein Auswahlmodul (21), ausgelegt, um repräsentative Bereiche (AR) des Gegenstands auf der Grundlage der aufgenommenen Bilder (A, A1) im Referenzbereich (40) auszuwählen;
- ein Positionsmodul (26), ausgelegt, um die Hauptparameter (P) zu ermitteln, die sukzessive Positionen der repräsentativen Bereiche (AR) eines selben Gegenstands im Referenzbereich (40) identifizieren.

4. System (100) nach Anspruch 3, wobei das Auswahlmodul (21) ein bildvergleichendes Modul (1000) umfasst, ausgelegt, um Vergleichsbilder (C1, C2, C3, C4) zu generieren, erhalten als Vergleich zwischen den aufgenommenen Bildern (A, A1) des Referenzbereichs (40) und einem oder mehreren Referenzbildern.

5. System (100) nach Anspruch 4, wobei das bildvergleichende Modul (1000) ein erstes Betriebsmodul (121) umfasst, ausgelegt, um die aufgenommenen Bilder (A, A1) der jeweiligen dritten Einflussregion (43) und der vierten Einflussregion (44) mit entsprechenden Bildern des Hintergrunds der jeweiligen dritten Einflussregion (43) und der vierten Einflussregion (44) zu vergleichen, wobei die Hintergrundbilder diese Referenz darstellen, wobei der Vergleich die jeweiligen Vergleichsbilder (C1, C2) generiert.

6. System (100) nach Anspruch 4, wobei das Vergleichsmodul (1000) ein zweites Betriebsmodul (221) umfasst, ausgelegt, um ein erstes aufgenommenes Bild (A) von einer ersten Kamera (10) in der ersten oder zweiten Einflussregion (41, 42) und ein zweites aufgenommenes Bild (A1) von einer zweiten Kamera (10a) in derselben ersten oder zweiten Einflussregion (41, 42) zu vergleichen, wobei die Bilder gleichzeitig aufgenommen werden, das zweite aufgenommene Bild (A1) die Referenz darstellt und der Vergleich das Vergleichsbild (C3, C4) generiert.

7. System (100) nach einem der Ansprüche 4 bis 6, wobei das Auswahlmodul (21) Bildfiltermittel (421) umfasst, ausgelegt nach einem vorgegebenen Filterfenster und einer vorgegebenen Filterschwelle, um die repräsentativen Bereiche (AR) aus den Vergleichsbildern (C1, C2, C3, C4) zu identifizieren.

8. System (100) nach Anspruch 1, wobei die Bildverarbeitungseinheit (20) ein Bild-Remapping-Modul (321) umfasst, ausgelegt für das Remapping der aufgenommenen Bilder (A, A1) als eine Eingabe im Referenzbereich (40), sodass die Eingabebilder in das erste Erfassungsmodul (522) Bilder sind, bezüglich derer anhand einer geeigneten Technik zur Ermittlung einer geometrischen Übereinstimmung zwischen den Pixeln des Bilds und den Punkten der realen Welt ein Remapping durchgeführt wurde.

9. System (100) nach Anspruch 4 bis 7, wobei das zweite Erfassungsmodul (22) ein Bereichskorrelationsmodul (25) umfasst, ausgelegt, um repräsentative Bereiche (AR) eines selben sich bewegenden Gegenstands in den sukzessiven Vergleichsbildern (C1, C2, C3, C4) zu erkennen.

10. System (100) nach Anspruch 10, wobei das Bereichskorrelationsmodul (25) ausgelegt ist, um
- auf identische Weise repräsentative Bereiche (AR) eines selben Gegenstands in den sukzessiven Vergleichsbildern (C1, C2, C3, C4) zu kennzeichnen;
- Assoziationsbereiche (AS) unter den repräsentativen Bereichen (AR), die auf identische Weise im Referenzbereich (40) gekennzeichnet wurden, zu identifizieren, wobei das Positionsmodul (26) ausgelegt ist, um die Hauptparameter (P) als eine Funktion dieser Assoziationsbereiche (AS) zu ermitteln und diese Parameter (P) an das Aktivierungsmodul (23) zu übermitteln.

11. System (100) nach einem der Ansprüche 1 bis 11, umfassend vier Kameras (10, 10a, 10b, 10c), assoziiert mit dem automatischen Tor (30), wobei diese Kameras (10, 10a, 10b, 10c) mit ihren jeweiligen Halterungskonstruktionen (33, 34) verbunden sind, installiert auf einer höher liegenden Ebene im Vergleich zum automatischen Tor (30) und winkelig nach unten gerichtet, um den gesamten Referenzbereich (40) abzudecken.

## Revendications

1. Système (100) pour le contrôle d'une porte pivotante automatique à deux vantaux (30),
la porte comprenant deux structures de support (33, 34) et deux vantaux (31, 32) montés pivotant sur lesdites structures de support (33, 34) et en mesure de tourner autour d'elles en provoquant l'ouverture/la fermeture de la porte automatique (30),
et ledit système (100) comprenant :
- deux caméras (10, 10a) étant reliées à leur structure de support respective (33, 34), étant installées à un niveau plus élevé par rapport à la porte automatique (30) et étant orientées vers le bas pour l'acquisition d'images (A, A1) d'une zone de référence (40) de ladite porte automatique (30) étant une zone où le système (100) peut détecter un sujet près de ladite porte (30), ladite zone de référence (40) étant définie par :
- une première ligne de délimitation (411), coïncidant avec la ligne déterminée par la position de repos des vantaux (31, 32) lorsqu'ils sont fermés ;
- une seconde ligne de délimitation (421) qui relie idéalement deux points de référence P1 et P1' définis comme des points d'extrémité d'une zone que les deux caméras (10, 10a) couvrent et qui repose sur les lignes déterminées par la position de repos des vantaux (31,32) lors de leur ouverture maximale ;
- une troisième et une quatrième ligne de délimitation (431, 441) coïncidant respectivement avec les lignes déterminées par la position de repos des vantaux (31, 32) lors de leur ouverture maximale et se développant jusqu'à leurs points de référence respectifs (P1, P1') ;
ladite zone de référence étant divisée en au moins quatre aires d'influence pour des vantaux ouverts au moins partiellement,
ladite première aire d'influence (41) étant délimitée par lesdits vantaux (31, 32), par la première ligne de délimitation (411) et par une cinquième ligne de délimitation (412) joignant les extrémités libres définies par L1 et L2 des vantaux (31, 32), où ladite première aire d'influence (41) augmente sa surface à mesure que l'angle d'ouverture (a) des vantaux (31, 32) augmente ;
la seconde aire d'influence (42) est, elle, délimitée par ladite cinquième ligne de délimitation (412), par ladite seconde ligne de délimitation (421) et par des segments de droite joignant chaque extrémité libre (L1, L2) desdits vantaux (31, 32) avec son point de référence correspondant P1' et P1 sur le même côté correspondant de la zone de référence, où ladite seconde aire d'influence (42) diminue sa surface à mesure que l'angle d'ouverture (a) des vantaux (31, 32) augmente ;
la troisième aire d'influence (43) est, elle, délimitée par ledit premier vantail (31), par ladite troisième ligne de délimitation (431) et par un segment de droite joignant ladite première extrémité libre L1 au point de référence P1' sur le même côté de la zone de référence ;
la quatrième aire d'influence (44) est, elle, délimitée par ledit second vantail (32), par ladite quatrième ligne de délimitation (441) et par un segment de droite joignant ladite seconde extrémité libre L2 à l'autre desdits points de référence P1, L2 et P1 étant sur le même côté de la zone de référence,
où ladite troisième aire d'influence (43) et ladite quatrième aire d'influence (44) diminuent leur surface à mesure que l'angle d'ouverture (a) des vantaux (31, 32) augmente ;
- une unité de traitement d'image (20), reliée auxdites deux caméras (10, 10a), ladite unité comprenant :
- un premier module de détection (522) configuré pour détecter une image desdites aires d'influence (41, 42, 43, 44) dans une zone de référence (40), ladite image détectée étant obtenue en fonction des images acquises (A, A1);
- un second module de détection (22) configuré pour détecter, dans ladite pluralité d'aires d'influence détectées (41, 42, 43, 44), un sujet sur la base des images acquises (A, A1), ledit second module de détection (22) étant configuré pour détecter et traiter des images (A, A1) à partir d'une seule caméra pour la détection d'un sujet dans chacune des troisième et quatrième aires d'influence et configuré pour détecter et traiter des images à partir des deux caméras pour la détection d'un sujet dans chacune des première et seconde régions d'influence ;
- un module d'activation (23) configuré pour commander une action (AZ) de ladite porte automatique (30) lorsque ledit sujet est détectée à l'intérieur de ladite zone de référence (40).

2. Système (100) selon la revendication 1, dans lequel ladite unité de traitement d'image (20) comprend de plus :
- un premier module de filtrage (523) configuré pour supprimer le bruit (N) provoqué par ladite porte automatique (30) de ladite image détectée par ledit premier module de détection (522), ledit bruit (N) étant créé par les vantaux (31, 32) couvrant une partie de la zone de référence.

3. Système (100) selon l'une quelconque des revendications précédentes, dans lequel ledit second module de détection (22) comprend de plus :
- un module de sélection (21) configuré pour sélectionner des zones représentatives (AR) de ledit sujet sur la base desdites images acquises (A, A1) dans ladite zone de référence (40) ;
- un module de détection de position (26) configuré pour déterminer les principaux paramètres (P) identifiant les positions successives desdites zones représentatives (AR) d'un même sujet, dans ladite zone de référence (40).

4. Système (100) selon la revendication 3, dans lequel ledit module de sélection (21) comprend un module de comparaison d'image (1000) configuré pour générer des images de comparaison (C1, C2, C3, C4) obtenues sous forme d'une comparaison entre lesdites images acquises (A, A1) de ladite zone de référence (40) et une ou plusieurs images de référence.

5. Système (100) selon la revendication 4, dans lequel ledit module de comparaison d'image (1000) comprend un premier module de fonctionnement (121) configuré pour comparer lesdites images acquises (A, A1) de ladite troisième aire d'influence correspondante (43) et de la quatrième aire d'influence (44) avec les images correspondantes d'arrière-plan desdites troisième aire d'influence (43) et quatrième aire d'influence (44) correspondantes, lesdites images d'arrière-plan constituant ladite référence, ladite comparaison générant lesdites images de comparaison respectives (C1, C2).

6. Système (100) selon la revendication 4, dans lequel ledit module de comparaison (1000) comprend un second module de fonctionnement (221) configuré pour comparer une première image acquise (A) à partir d'une première caméra (10) dans ladite première ou seconde aire d'influence (41, 42), et une seconde image acquise (A1) à partir d'une seconde caméra (10a) dans les mêmes première ou seconde aires d'influence (41, 42), lesdites images étant acquises simultanément, ladite seconde image acquise (A1) constituant ladite référence, ladite comparaison générant ladite image de comparaison (C3, C4).

7. Système (100) selon l'une quelconque des revendications de 4 à 6, dans lequel ledit module de sélection (21) comprend des moyens de filtrage d'image (421) configurés, selon une fenêtre de filtrage prédéterminée et un seuil de filtrage prédéterminé, pour identifier lesdites zones représentatives (AR) à partir desdites images de comparaison (C1, C2, C3, C4).

8. Système (100) selon la revendication 1, dans lequel ladite unité de traitement d'images (20) comprend un module (321) permettant une nouvelle cartographie de l'image, configuré pour cartographier à nouveau lesdites images acquises (A, A1) comme une entrée dans ladite zone de référence (40), de manière à ce que les images en entrée dudit premier module de détection (522) sont des images à nouveau cartographiées utilisant une technique adaptée pour la détermination d'une correspondance géométrique entre les pixels de l'image et les points du monde réel.

9. Système (100) selon les revendications 4 à 7, dans lequel ledit second module de détection (22) comprend un module de corrélation de zone (25) configuré pour reconnaître des zones représentatives (AR) d'un même sujet en déplacement dans lesdites images de comparaison successives (C1, C2, C3, C4).

10. Système (100) selon la revendication 10, dans lequel ledit module de corrélation d'image (25) est configuré pour
- marquer d'une manière identique des zones représentatives (AR) d'un même sujet dans lesdites images de comparaison successives (C1, C2, C3, C4) ;
- identifier des zones d'association (AS) parmi lesdites zones représentatives (AR) marquées d'une manière identique dans ladite zone de référence (40), ledit module de détection de position (26) étant configuré pour déterminer lesdits principaux paramètres (P) en fonction desdites zones d'association (AS) et pour transmettre lesdits paramètres (P) au dit module d'activation (23).

11. Système (100) selon l'une quelconque des revendications de 1 à 11, comprenant quatre caméras (10, 10a, 10b, 10c) associées à ladite porte automatique (30), lesdites caméras (10, 10a, 10b, 10c) étant reliées à leur structure de support respective (33, 34), étant installées à un niveau plus élevé par rapport à la porte automatique (30) et étant orientées vers le bas de sorte à couvrir toute la zone de référence (40).
